# EUROPÄISCHE PATENTANMELDUNG

(11) **EP 3 091 049 A1**
(43) Veröffentlichungstag der Anmeldung: **09.11.2016**
(21) Anmeldenummer: 15166968.6
(22) Anmeldetag: 08.05.2015
(51) Int. Cl.: C08K 3/22, C08K 3/28, C08K 3/34, C08K 3/36, C08L 63/00

(54) **LAGERUNGSSTABILE IMPRÄGNIERHARZE UND ELEKTROISOLATIONSBÄNDER**

(71) Anmelder: Siemens Aktiengesellschaft, 80333 München (DE)
(72) Erfinder: Gröppel, Peter, 91052 Erlangen (DE); Nagel, Michael, 91350 Gremsdorf (DE); Brockschmidt, Mario, 45131 Essen (DE); Mühlberg, Regina, 06128 Halle (DE); Pohlmann, Friedhelm, 45355 Essen (DE); Röding, Roland, 99755 Ellrich (DE); Weil, Manuel, 40227 Düsseldorf (DE)

(57) **Zusammenfassung**

Die Erfindung betrifft ein anhydridfreies Imprägnierharz für einen Elektroisolationskörper, wobei das Imprägnierharz ein Epoxidharz, einen Härter und nanoskalige und/oder mikroskalige anorganische Partikel aufweist. Die Erfindung betrifft ferner ein imprägnierbares Elektroisolationsband für einen Elektroisolationskörper (1), wobei ein Härter (4) auf das Elektroisolationsband (1) aufgebracht ist. Die Erfindung betrifft ferner ein Verfahren zum Herstellen eines Elektroisolationskörpers, den Elektroisolationskörper und die Verwendung des Elektroisolationskörpers.

## Beschreibung

Die Erfindung betrifft ein anhydridfreies Imprägnierharz für einen Elektroisolationskörper, ein imprägnierbares Elektroisolationsband für einen Elektroisolationskörper, ein Verfahren zum Herstellen eines Elektroisolationskörpers, den Elektroisolationskörper und die Verwendung des Elektroisolationskörpers.

Elektrische Hochspannungsrotationsmaschinen, wie beispielsweise Generatoren, weisen elektrische Leiter, eine Hauptisolation und ein Ständerblechpaket auf. Die Hauptisolation hat den Zweck, die elektrischen Leiter dauerhaft gegeneinander, gegen das Ständerblechpaket und gegen die Umgebung elektrisch zu isolieren. Beim Betrieb der Maschinen treten elektrische Teilentladungen auf, die zur Ausbildung von sog. "Treeing"-Kanäle in der Hauptisolation führen. An den "Treeing"-Kanälen ist die Hauptisolation nur noch reduziert elektrisch belastbar und es kann zu einem elektrischen Durchschlag der Hauptisolation kommen. Eine Barriere gegen die Teilentladungen wird durch den Einsatz eines Elektroisolationsbands erreicht. Das Elektroisolationsband weist ein Elektroisolationspapier, beispielsweise ein Glimmerpapier, auf, welches auf einen Träger aufgebracht ist.

Bei der Herstellung der Hauptisolation wird das Elektroisolationsband zunächst um den Leiter gewickelt und dann mit einem Kunstharz, beispielsweise einem Epoxidharz, imprägniert. Anschließend wird das Kunstharz ausgehärtet. Zur Verbesserung der Beständigkeit der Hauptisolation ist der Einsatz von nanoskaligen und/oder mikroskaligen anorganischen Partikeln, die dem Kunstharz vor dem Imprägnieren und Aushärten zugesetzt werden, bekannt.

Zur Imprägnierung des Elektroisolationsbands wird der Leiter, um den das Elektroisolationsband gewickelt ist, beispielsweise in einer Wanne, in der sich das Kunstharz befindet, mit dem Kunstharz getränkt. Dabei dringt nur ein kleiner Anteil des Kunstharzes in das Elektroisolationsband ein. Der in der Wanne verbleibende Anteil des Kunstharzes wird in einen Vorratsbehälter zurück geführt und bevorratet, um es zu einem späteren Zeitpunkt für die Herstellung weiterer Elektroisolationskörper zu verwenden. Aus diesem Grund ist die Lagerungsstabilität des verbleibenden Kunstharzes von großer Bedeutung.

Aufgabe der Erfindung ist es, ein Imprägnierharz für einen Elektroisolationskörper und ein Elektroisolationsband für einen Elektroisolationskörper bereit zu stellen, wobei sowohl das Imprägnierharz als auch das Elektroisolationsband eine hohe Lagerungsstabilität haben.

Das erfindungsgemäße Imprägnierharz ist ein anhydridfreies Imprägnierharz für einen Elektroisolationskörper, wobei das Imprägnierharz ein Epoxidharz, einen Härter und nanoskalige und/oder mikroskalige anorganische Partikel aufweist, wobei der Härter aus der Gruppe bestehend aus einem substituierten Guanidin, einem aromatischen Diamin, einem N-Acylimidazol, einem Metallsalzkomplex eines Imidazols, einem Carbonsäurehydrazid, einem Triazinderivat, Melamin, einem Melaminderivat, einer Cyanacetylverbindung, einer N-Cyanacylamid-Verbindung, einem Acylthiopropylphenol, einem Harnstoffderivat, einem aliphatischen Diamin, einem cycloaliphatischen Diamin, einem aliphatischen Polyamin, einem cycloaliphatischen Polyamin und Gemischen davon ausgewählt ist.

Das erfindungsgemäße Imprägnierharz weist keine Anhydride auf. Anhydride sind als Härter für Epoxidharze bekannt. Aufgrund ihres hohen Dampfdrucks, ihres niedrigen Siedepunkts und ihrer toxikologischen Bedenklichkeit für Mensch und Umwelt besteht jedoch der Bedarf, die für Imprägnierharze eingesetzten Anhydride durch andere Härter zu ersetzen. Indem das erfindungsgemäße Imprägnierharz frei von Anhydriden ist, werden Mitarbeiter und Umwelt geschützt. Zudem sind die für das erfindungsgemäße Imprägnierharz zur Auswahl stehenden Härter toxikologisch unbedenklich.

Die Erfinder haben überraschenderweise festgestellt, dass der Ersatz der Anhydride durch die in dem erfindungsgemäßen Imprägnierharz verwendeten Härter zu einer hohen Lagerungsstabilität des Imprägnierharzes führt.

Die Oberfläche der nanoskaligen und/oder mikroskaligen anorganischen Partikeln weist häufig reaktive Gruppen, wie beispielsweise Hydroxylgruppen, auf. In einem herkömmlichen unpolymerisierten, das heißt noch nicht ausgehärteten Imprägnierharz kann dadurch eine lokale Polymerisierung des Imprägnierharzes verursacht werden. Diese Polymerisierung führt zu einem Anstieg der Viskosität des Imprägnierharzes, wodurch die weitere Verwendung des Imprägnierharzes erschwert wird. Die Erfinder haben überraschenderweise festgestellt, dass der Ersatz der Anhydride durch die in dem erfindungsgemäßen Imprägnierharz verwendeten Härter die lokale Polymerisierung des Imprägnierharzes verhindert. Dadurch wird ein Anstieg der Viskosität während der Lagerung über einen langen Zeitraum vermieden. Somit kann das Imprägnierharz vorteilhaft länger verwendet werden, beispielsweise zum Herstellen weiterer Elektroisolationskörper.

Das erfindungsgemäße Imprägnierharz erfüllt die extremen Anforderungen an Ausgangsviskosität und Lagerungsstabilität, wie sie in Ganztränkverfahren für elektrische Hochspannungsrotationsmaschinen, wie beispielsweise Turbogeneratoren, benötigt werden. Dabei erhöhen die anorganischen Partikel sowohl die Beständigkeit der Isolation gegen elektrische Teilentladungen als auch die elektrische Lebensdauer von Wicklungen elektrischer rotierender Maschinen. Durch die Partikel kann zudem der Epoxidharzgehalt der Isolation verringert und die Wärmeleitfähigkeit der Isolation erhöht werden.

In einer bevorzugten Ausführungsform weist das Epoxidharz Bisphenol-A-diglycidylether, Bisphenol-F-diglycidylether, Phenolnovolake, aliphatische Epoxide und/oder cycloaliphatische Epoxide auf. Cycloaliphatische Epoxide sind beispielsweise 3,4-Epoxycyclohexylepoxyethan und 3,4-Epoxycyclohexylmethyl-3,4-epoxy-cyclohexancarboxylat. In einer besonders bevorzugten Ausführungsform weist das Epoxidharz Bisphenol-A-diglycidylether und/oder Bisphenol-F-diglycidylether auf.

Das substituierte Guanidin ist vorzugsweise Dicyandiamid, Benzoguanamin, Formoguanamin, Acetoguanamin, o-Tolylbiguanidin und/oder ein Cyanoguanidin.

Das Cyanoguanidin ist vorzugsweise
N-Cyano-N'-(2,6-diisopropyl-4-phenoxyphenyl)-N"-tert-butyl-guanidin,
N-Cyano-N'-[2,6-dimethyl-4-(3',5'-dichloro-2'-pyridyloxy)-phenyl]-N"-tert-butylguanidin,
N-Cyano-N'-Cyclohexyl-N"-phenylguanidin,
N-Cyano-N'-2-methoxycarbonylethyl-N"-phenylguanidin,
N-Allyl-N'-cyano-N"-phenylguanidin,
N,N'-bis(allyl)-N"-cyanoguanidin,
N,N'-bis(1-naphtyl)-N"-cyanoguanidin,
N,N'-bis(cyclohexyl)-N"-cyanoguanidin und/oder
ein oligomeres Cyanoguanidin.

In einer bevorzugten Ausführungsform ist das substituierte Guanidin Dicyandiamid. Die Erfinder haben festgestellt, dass beim Einsatz von Dicyandiamid als Härter eine besonders hohe Lagerungsstabilität des Imprägnierharzes erreicht wird. Dicyandiamid ist zudem toxikologisch unbedenklich und bei niedrigen Temperaturen wie beispielsweise von etwa 0°C bis etwa 25°C chemisch inert, das heißt es reagiert nicht mit dem Epoxidharz. Durch Zufuhr von Wärme lässt sich die Reaktion mit dem Epoxidharz herbeiführen.

Das aromatische Diamin ist vorzugsweise
4,4'-Diaminodiphenylsulfon, 3,3'-Diaminodiphenylsulfon,
4,4'-Methylendiamin, 1,2-Benzendiamin, 1,3-Benzendiamine,
1,4-Benzendiamin, Bis-(4-aminophenyl)-1,4-diisopropylbenzen,
Bis-(4-amino-3,5-dimethylphenyl)-1,4-diisopropylbenzen,
Diaminodiphenylether, Diaminobenzophenon, 2,6-Diaminopyridin,
2,4-Toluendiamin, Diaminodiphenylpropan,
1,5-Diaminonaphthalin, Xylendiamin,
1,1-Bis-4-aminophenylcyclohexan,
Methylen-bis-(2,6-diethylanilin),
Methylen-bis-(2-isopropyl-6-methylanilin),
Methylen-bis-(2,6-diisopropylanilin),
4-Aminodiphenylamin,
Diethyltoluendiamin,
Phenyl-4,6-diaminotriazin und/oder
Lauryl-4,6-diaminotriazin.

Das N-Acylimidazol ist vorzugsweise
1-(2,6-dichlorobenzoyl)-2-methylimidazol,
1-(2,6-dichlorobenzoyl)-2-phenylimidazol,
1-(2,6-dichlorobenzoyl)-4-phenylimidazol,
1-(2,6-dichlorobenzoyl)-2-ethyl-4-methylimidazol,
1-(2-Chloro-6-nitrobenzoyl)-2-phenylimidazol,
1-(2-Chloro-6-nitrobenzoyl)-2-ethyl-4-methylimidazol,
1-Pentachlorobenzoyl-2-methylimidazol,
1-Pentachlorobenzoyl-2-phenylimidazol,
1-Pentachlorobenzoyl-2-ethyl-4-methylimidazol,
1-(2,4,6-Trimethylbenzoyl)-2-phenylimidazol und/oder
1-Benzoyl-2-isopropylimidazol.

Der Metallsalzkomplex eines Imidazols ist vorzugsweise
ein Nickelchloridkomplex von Imidazol,
ein Kupferchloridkomplex von Imidazol,
ein Kupfersulfatkomplex von 2-Ethyl-4-methylimidazol,
ein Kupferbromidkomplex von 2-Ethylimidazol,
ein Kobaltchloridkomplex von 2-Methylimidazol, und/oder
ein Metallsalzkomplex eines Imidazolsalzes.

Der Metallsalzkomplex eines Imidazolsalzes ist vorzugsweise ein Kupfernitrat-Komplex von 2-Ethyl-1,3-dibenzylimidazolchlorid,
ein Kupferchlorid-Komplex von 1,2-Dimethyl-3-dibenzylimidazolchlorid,
ein Kobaltchlorid-Komplex von 1-Benzyl-2-ethyl-3-methylimidazolchlorid,
ein Kupferbromid-Komplex von 1-(2-Carbamyl-ethyl)-3-hexylimidazolbromid,
ein Kupferbromid-Komplex von 1,3-Dibenzylbenzimidazolchlorid, und/oder
ein Kupfernitrat-Komplex vonl,3-Dibenzylbenzimidazolchlorid.

Das Carbonsäurehydrazid ist vorzugsweise Adipinsäuredihydrazid, Isophthalsäuredihydrazid und/oder Anthranilsäurehydrazid.

Das Triazinderivat ist vorzugsweise
2-Phenyl-4,6-diamino-s-triazin (Benzoguanamin) und/oder
2-Lauryl-4,6-diamino-s-triazin (Lauroguanamin).

Das Melaminderivat ist vorzugsweise ein N-substituiertes Melamin, besonders bevorzugt N,N-Diallylmelamin, N-Ethylmelamin, N,N-Diethylmelamin, N-Butylmelamin, N-Phenylmelamin und/oder N-Ortho-phenyl-phenylmelamin.

Die Cyanacetylverbindung ist vorzugsweise Neopentylglykolbiscyanessigester, Cyanessigsäure-N-isobutylamid, Hexamethylen-1,6-bis-cyanacetat, 1,4-Cyclohexandimethanol-bis-cyanacetat, 2,2-(4,4'-di-cyanacetoxyethoxy-phenyl)-propan und/oder Cyanessigsäureethylester.

Die N-Cyanacylamid-Verbindung ist vorzugsweise
N,N'-Dicyanadipinsäurediamid,
N-Cyan-N-beta-methallylacetamid,
N-Cyan-N-vinylbenzylacetamid,
N-Cyan-N-allylacetamid,
N-Cyan-N-2-vinyloxyethylacetamid,
N-Isopropyl-N-cyanacetamid,
N-n-Butyl-N-cyanacetamid,
N-Isobutyl-N-cyanacetamid,
N-n-Heptyl-N-cyanacetamid,
N-Benzyl-N-cyanacetamid,
N-Methyl-N-cyanacetamid,
Adipinsäure-bis-(N-cyan-methylamid),
Adipinsäure-bis-(N-cyan-ethylamid),
Adipinsäure-bis-(N-cyan-isopropylamid),
Adipinsäure-bis-(N-cyan-n-butylamid),
Adipinsäure-bis-(N-cyan-allylamid),
Adipinsäure-bis-(N-cyan-2,4-dimethylphenylamid), Glutarsäure-bis-(N-cyan-methylamid),
Glutarsäure-bis-(N-cyan-ethylamid),
Glutarsäure-bis-(N-cyan-benzylamid),
Glutarsäure-bis-(N-cyan-4-nitrobenzylamid),
Bernsteinsäure-bis-(N-cyan-methylamid),
Sebacinsäure-bis-(N-cyan-methylamid),
2-Methylglutarsäure-bis-(N-cyan-methylamid),
4,4'-Methylen-bis-(N-acetyl-phenylcyanamid),
1,4-Bis-(N-acetyl-N-cyanaminomethyl)-benzen,
1,6-Bis-(N-acetyl-N-cyanamino)-hexan und/oder
cis-1,4-Bis-(N-acetyl-N-cyanamino)-but-2-en.

Das Acylthiopropylphenol ist vorzugsweise
2,2'-bis(3-acetylthiopropyl-4-hydroxyphenyl)propan und/oder (o-Acetylthiopropyl)phenol.

Das Harnstoffderivat ist vorzugsweise
Toluol-2,4-bis-(N,N-dimethylcarbamid),
1,1'-(4-methyl-m-phenylen)-bis-(3,3-dimethylurea),
1,1'-(methylen-p-phenylen)-bis-(3,3-dimethylurea),
1,1'-phenylen-bis-(3,3-dimethylurea),
1,1'-(3,3'-dimethoxy-4,4'-biphenylen)-bis-(3,3-dimethylurea),
1,1'-(4-methyl-m-phenylen)-bis-(3,3-aziridinylurea) und/oder
N,N'-(4-methyl-m-phenylen)-bis-(1-piperidincarboxamid.

Das Polyamin ist vorzugsweise ein Polyetheramin.

Die aliphatischen oder cycloaliphatischen Diamine und/oder Polyamine sind vorzugsweise reaktionsträge bzw. haben eine durch sterische und/oder elektronische Einflussfaktoren herabgesetzte Reaktivität. Vorzugsweise sind sie alternativ oder zusätzlich auch schlecht löslich oder hochschmelzend.

In einer bevorzugten Ausführungsform ist der Härter ein Gemisch aus zwei oder mehr Härtern. In einer besonders bevorzugten Ausführungsform weist das Gemisch Dicyandiamid und 4,4'-Diaminodiphenylsulfon auf.

In einer bevorzugten Ausführungsform ist der Härter in einem festen Zustand in dem Epoxidharz suspendiert. Das unpolymerisierte, das heißt noch nicht ausgehärtete Epoxidharz weist einen flüssigen Zustand auf. Wird der Härter in einem festen Zustand verwendet, ergibt sich ein Fest/Flüssig-Zweiphasensystem. Dadurch steigt die Lagerungsstabilität des Imprägnierharzes. In einer bevorzugten Ausführungsform weist das Imprägnierharz daher ein Epoxidharz in einem flüssigen Zustand, einen Härter in einem festen Zustand und nanoskalige und/oder mikroskalige anorganische Partikel auf.

In einer bevorzugten Ausführungsform ist der Härter in Form von Partikeln in dem Epoxidharz suspendiert. Die Partikel weisen hierzu vorzugsweise eine Partikelgröße auf, die eine möglichst homogene Suspension unter Rühren ermöglicht. In einer besonders bevorzugten Ausführungsform ist der Härter in Form von Partikeln mit einer Partikelgröße von 1µm - 100µm in dem Epoxidharz suspendiert. Partikel dieser Größe sind besonders geeignet, um eine homogene Suspension der Partikel in dem Epoxidharz zu erreichen. Partikel, die kleiner als ein 1 µm sind, können beispielsweise durch Sieben entfernt werden.

In einer bevorzugten Ausführungsform liegt der Härter in einer Menge bezogen auf das Epoxidharz von 1 Gew.-% - 15 Gew.-%, bevorzugt von 4 Gew.-% - 10 Gew.-% vor. Dieses Mengenverhältnis zwischen dem Epoxidharz und dem Härter hat sich als besonders vorteilhaft erwiesen.

In einer bevorzugten Ausführungsform weisen die anorganischen Partikel Aluminiumoxid, Aluminiumhydroxid, Siliziumdioxid, Titandioxid, Seltenerdenoxid, Alkalimetalloxid, Metallnitrid, und/oder Schichtsilikate, insbesondere exfolierte oder teilweise exfolierte Schichtsilikate, auf. Diese Stoffe sind besonders für die Verarbeitung in der Hochspannungsisolierung geeignet, da sie selbst elektrisch nicht leitfähig sind. Außerdem sind Partikel, die die genannten Stoffe aufweisen, besonders widerstandsfähig gegenüber Hochspannung.

Die Partikel sind bevorzugt nanoskalige Partikel. Nanoskalige Partikel (Nanopartikel) weisen eine hohe spezifische Oberfläche auf. Durch das hohe Oberfläche-zu-Volumen-Verhältnis besteht eine erhöhte Gefahr dafür, dass die reaktiven Gruppen auf der Partikeloberfläche die Harzmonomere des Reaktionsharzes angreifen. Folglich ist es vorteilhaft, gerade diese Partikel mit einem oder mehreren der in dem erfindungsgemäßen Imprägnierharz verwendeten Härter zu kombinieren, um das Imprägnierharz vor einer verfrühten Polymerisierung während der Lagerung zu schützen.

In einer bevorzugten Ausführungsform liegen die anorganischen Partikel in einer Menge bezogen auf das Epoxidharz von 15 Gew.-% - 25 Gew.-%, bevorzugt von 17 Gew.-% vor. Bei dieser Menge der anorganischen Partikel wird eine besonders hohe Beständigkeit der Isolation gegen Hochspannung und eine gute Wärmeleitfähigkeit des Imprägnierharzes erreicht. Zugleich reicht die Menge des Epoxidharzes aus, um ein Imprägnierharz mit guter Festigkeit zu erhalten. Somit liegt ein optimales Mengenverhältnis zwischen dem Epoxidharz und den anorganischen Partikeln vor.

In einer bevorzugten Ausführungsform weist das Imprägnierharz weiter einen Katalysator auf. Der Katalysator steigert die Reaktivität des Härters, so dass die Polymerisierung des Imprägnierharzes beschleunigt wird. Dadurch kann die Polymerisierung schon bei einer Temperatur von beispielsweise etwa 50°C bis etwa 90°C beginnen, so dass eine teilweise Gelierung des Imprägnierharzes während der Imprägnierung eines Elektroisolationsbands stattfindet. Durch die Anwesenheit des Katalysators wird die Polymerisierung, das heißt die Aushärtung des Imprägnierharzes schon bei einer Temperatur wie beispielsweise etwa 150°C ermöglicht. Die Verwendung von niedrigeren Temperaturen im Vergleich zur Abwesenheit des Katalysators spart Energie, erhöht die Taktzeit und schont temperaturempfindliche Untergründe.

In einer bevorzugten Ausführungsform ist der Katalysator aus der Gruppe bestehend aus Zinknaphthenat, Kobaltnaphthenat, Zinkoctoat, Kobaltoctoat, einem Imidazol, einem tertiären Amin, einem Aluminiumtrisalkylacetoacetat, Aluminiumtrisacetylacetonat, Aluminiumalkoholat, Aluminiumacylat, einem Tetraalkylammoniumbenzoat und Gemischen davon ausgewählt. Diese Verbindungen sind als Katalysatoren für die Polymerisierung von Epoxidharzen bekannt. Die Möglichkeit bekannte Katalysatoren beizubehalten ist ein Vorteil des erfindungsgemäßen Imprägnierharzes. Die Katalysatoren können für eine bessere Verarbeitbarkeit auf einen festen Träger, wie beispielsweise Kieselsäure, aufgezogen sein, um den Auswirkungen einer möglichen Hygroskopie entgegen zu wirken.

Das Aluminiumtrisalkylacetoacetat ist vorzugsweise Aluminiumtrisethylacetoacetat.

Das Tetraalkylammoniumbenzoat ist vorzugsweise Tetrabutylammoniumbenzoat, Benzyltrimethylammoniumbenzoat und/oder Tetraethylammoniumbenzoat.

In einer bevorzugten Ausführungsform liegt der Katalysator in einer Menge bezogen auf das Epoxidharz von 0,1 Gew.-% - 5,0 Gew.-%, bevorzugt von 0,3 Gew.-% - 2,0 Gew.-%, besonders bevorzugt von 0,5 Gew.-% - 1,0 Gew.-% vor.

In einer bevorzugten Ausführungsform weist das Imprägnierharz weiter einen Reaktivverdünner auf. Der Begriff "Reaktivverdünner" umfasst jede organische Verbindung, die eine niedrigere Viskosität als das Epoxidharz aufweist und somit die Viskosität des Imprägnierharzes herabsetzt. Die niedrigere Viskosität des Imprägnierharzes steigert dessen Lagerungsstabilität. Der Reaktivverdünner wird auch genutzt, um die Viskosität des Imprägnierharzes zu steuern. Durch das Einstellen der Viskosität wird eine regulierbare Qualität der Isolation im Hinblick auf Tränkfehler und optimalen Harzgehalt erreicht. Die niedrigere Viskosität des Reaktivverdünners im Vergleich zum Epoxidharz ermöglicht zudem einen höheren Massenanteil der anorganischen Partikel in dem Imprägnierharz im Vergleich zu einem Imprägnierharz mit gleicher Viskosität ohne den Reaktivverdünner.

Durch die Anwesenheit des Reaktivverdünners verringert sich außerdem die Konzentration des Epoxidharzes in dem Imprägnierharz, wodurch sich die Geschwindigkeit der Polymerisierung des Epoxidharzes erniedrigt. Dadurch hat das Imprägnierharz vor dem Imprägnieren eine besonders lange Lebensdauer. Somit lässt sich durch den Reaktivverdünner die Lagerungsstabilität des Imprägnierharzes weiter steigern.

Der Reaktivverdünner ist vorzugsweise Styrol, ein Derivat des Styrols wie beispielsweise Vinyltoluol, oder eine Ester oder Polyester bildende organische Verbindung. Styrol hat eine besonders niedrige Viskosität. Zudem trägt Styrol nicht zur Polymerisierung des nicht-radikalisch polymerisierenden Epoxidharzes bei, da Styrol selbst nur radikalisch polymerisiert. Gleiches gilt für Derivate des Styrols. Der Reaktivverdünner kann durch eine entsprechende Applikation ganz oder teilweise selbst aus dem Imprägnierharz entfernt werden, in den gehärteten Elektroisolationskörper als separates Netzwerk eingebaut werden und/oder in den gehärteten Elektroisolationskörper als Bestandteil des Harznetzwerkes eingebaut werden.

In einer bevorzugten Ausführungsform weist das Imprägnierharz weiter einen Verdicker auf. Der Verdicker erhöht die Viskosität und kann somit der Einstellung der Viskosität des Imprägnierharzes dienen. Der Verdicker ist bevorzugt ein Epoxid, das in einem hohen Molekulargewicht in einer oligomeren Form vorliegt, wie beispielsweise hochmolekularer Bisphenol-A-diglycidylether. Im Hinblick auf die gewünschten Eigenschaften des Imprägnierharzes kann auch ein Gemisch aus einem oder mehreren Reaktivverdünnern und einem oder mehreren Verdickern eingesetzt werden.

In einer bevorzugten Ausführungsform weist das Imprägnierharz weiter einen Initiator auf. Der Initiator dient der Aushärtung des Imprägnierharzes unter einer bestimmten Atmosphäre, beispielsweise im Fall von Lufthärtung, thermischer Aushärtung, durch Strahlung initiierbarer Aushärtung oder Aushärtung durch Kombination der genannten Methoden.

In einer bevorzugten Ausführungsform weist das Imprägnierharz weiter eine Säure auf. Durch die Säure kann die Reaktivität des Imprägnierharzes angepasst werden. Die Säure ist vorzugsweise Schwefelsäure, Essigsäure, Benzoesäure, Bernsteinsäure, Malonsäure, Terephthalsäure, Isophthalsäure, Oxalsäure und/oder Borsäure. Die Säure kann auch ein Copolyester oder ein Copolyamid mit einer Säurezahl von mindestens 20 sein. In einer besonders bevorzugten Ausführungsform ist die Säure Oxalsäure und/oder Bernsteinsäure.

In einer bevorzugten Ausführungsform liegt die Säure in einer Menge bezogen auf das Epoxidharz von 0,01 Gew.-% - 10 Gew.-%, bevorzugt von 0,1 Gew.-% - 1,0 Gew.-%, besonders bevorzugt von 0,15 Gew.-% - 0,5 Gew.-% vor.

Das erfindungsgemäße Imprägnierharz hat die gleichen Isolationseigenschaften wie bekannte Imprägnierharze, wodurch die langfristige Qualität der Isolation unter erhöhter elektrischer, mechanischer und thermischer Belastung sichergestellt ist.

In einem weiteren Aspekt betrifft die Erfindung ein imprägnierbares Elektroisolationsband für einen Elektroisolationskörper, wobei ein Härter auf das Elektroisolationsband aufgebracht ist. Das Elektroisolationsband ist noch nicht imprägniert und somit imprägnierbar. Das Elektroisolationsband ist vorzugsweise ein Glimmer und/oder Aluminiumoxid aufweisendes Elektroisolationsband.

Das Elektroisolationsband weist ein Elektroisolationspapier, das vorzugsweise plättchenförmigen Glimmer und/oder Aluminiumoxidpartikel aufweist, und einen Träger, auf den das Elektroisolationspapier zur Erhöhung der Festigkeit und zur Verbesserung der Verarbeitbarkeit aufgebracht ist, auf. Der Träger ist vorzugsweise porös und elektrisch nicht leitend. In einer bevorzugten Ausführungsform ist der Träger ein Strick, ein Vlies, ein Schaum, insbesondere ein offenporiger Schaum, ein Glasstrick, ein Glasroving, ein Gewebe und/oder eine Harzmatte. Der Träger weist vorzugsweise ein Polyester, insbesondere Dacron und/oder Polyethylenterephathalat (PET) auf.

Der Träger ist vorzugsweise mit dem Elektroisolationspapier verklebt. Die Porosität des Trägers und/oder des Elektroisolationspapiers ist derart, dass das Elektroisolationsband von dem Imprägnierharz durchtränkbar ist.

In einer bevorzugten Ausführungsform ist das Elektroisolationsband ein Glimmerband. Die Herstellung von Glimmerpapier und Glimmerbändern ist bekannt.

Der Begriff "Härter" bezieht sich auf Verbindungen, die eine chemische Reaktion mit dem Epoxidharz eingehen können, durch die das Epoxidharz in einen festen Zustand übergeht (Aushärten).

Während der Härter in bekannten Isolationen als Bestandteil des Imprägnierharzes in den Elektroisolationskörper eingebracht wird, ist der Härter erfindungsgemäß auf das Elektroisolationsband aufgebracht. Das Aufbringen des Härters auf das Elektroisolationsband stellt eine neue Möglichkeit dar, um den Härter in den Elektroisolationskörper einzubringen. Auf diese Weise kann ein härterfreies Imprägnierharz verwendet werden. Beim Imprägnieren des erfindungsgemäßen Elektroisolationsbandes kommt das Harz mit dem Härter in Kontakt, so dass die Polymerisierung des Harzes einsetzen kann. Die Verwendung eines härterfreien Imprägnierharzes hat den Vorteil, dass das Imprägnierharz aufgrund der Abwesenheit des Härters eine niedrige Viskosität beibehält und eine hohe Lagerungsstabilität hat.

Der Härter kann auf das gesamte Elektroisolationsband oder auf einen Abschnitt des Bands aufgebracht sein. In einer bevorzugten Ausführungsform ist der Härter auf einer der zwei breiten Seiten des Elektroisolationsbands aufgebracht.

In einer bevorzugten Ausführungsform ist der Härter auf einer ersten Seite des Elektroisolationsbands aufgebracht und ein Katalysator auf einer zweiten Seite des Elektroisolationsbands, die der ersten Seite abgewandt ist, aufgebracht. Die Begriffe "erste Seite" und "zweite Seite" beziehen sich auf die breiten Seiten des Elektroisolationsbands, das heißt auf die zwei sich gegenüberliegenden Seiten mit den größeren Oberflächen. Die örtlich getrennte Aufbringung von Härter und Katalysator auf unterschiedlichen Seiten des Elektroisolationsbands verhindert eine Reaktion des Härters mit dem Katalysator während der Lagerung des Elektroisolationsbands. Die Reaktion setzt nämlich voraus, dass der Härter und der Katalysator miteinander in Kontakt kommen. Somit wird durch die örtlich getrennte Aufbringung von Härter und Katalysator die Lagerungsstabilität des Elektroisolationsbands erhöht.

In einer bevorzugten Ausführungsform ist der Katalysator aus der Gruppe bestehend aus Zinknaphthenat, Kobaltnaphthenat, Zinkoctoat, Kobaltoctoat, einem Imidazol, einem tertiären Amin, einem Aluminiumtrisalkylacetoacetat, Aluminiumtrisacetylacetonat, Aluminiumalkoholat, Aluminiumacylat, einem Tetraalkylammoniumbenzoat und Gemischen davon ausgewählt.

Das Aluminiumtrisalkylacetoacetat ist vorzugsweise Aluminiumtrisethylacetoacetat.

Das Tetraalkylammoniumbenzoat ist vorzugsweise Tetrabutylammoniumbenzoat, Benzyltrimethylammoniumbenzoat und/oder Tetraethylammoniumbenzoat.

In einer bevorzugten Ausführungsform ist der Härter aus der Gruppe bestehend aus einem substituierten Guanidin, einem aromatischen Diamin, einem N-Acylimidazol, einem Metallsalzkomplex eines Imidazols, einem Carbonsäurehydrazid, einem Triazinderivat, Melamin, einem Melaminderivat, einer Cyanacetylverbindung, einer N-Cyanacylamid-Verbindung, einem Acylthiopropylphenol, einem Harnstoffderivat, einem aliphatischen Diamin, einem cycloaliphatischen Diamin, einem aliphatischen Polyamin, einem cycloaliphatischen Polyamin und Gemischen davon ausgewählt. Diese Härter führen zu einer hohen Lagerungsstabilität des Imprägnierharzes.

In einer bevorzugten Ausführungsform weist der Härter einen festen Zustand auf. Der feste Zustand des Härters vereinfacht im Vergleich zu einem Härter, der in einem flüssigen oder teilweise gelierten hochviskosen Zustand vorliegt, die Lagerung des Elektroisolationsbands und trägt zu dessen Lagerungsstabilität bei.

Die Herstellung des Elektroisolationsbands umfasst die Schritte Aufbringen des Härters auf die erste Seite des Elektroisolationsbands und Aufbringen des Katalysators auf die zweite Seite des Elektroisolationsbands, die der ersten Seite abgewandt ist. Die Reihenfolge der Herstellungsschritte ist dabei nicht relevant. Der Härter und/oder der Katalysator kann beispielsweise mittels einer Umlenkrolle auf die jeweilige Seite des Elektroisolationsbands aufgebracht werden. Vorzugsweise wird zunächst eine Seite und danach die andere Seite des Bands mit dem Härter bzw. dem Katalysator versehen.

Der Härter und/oder der Katalysator werden vorzugsweise in einem flüssigen Zustand auf das Elektroisolationsband aufgebracht. Hierzu werden der Härter und/oder der Katalysator temporär, beispielsweise durch Zufuhr von Wärme, in den flüssigen Zustand gebracht. Die Wärmezufuhr kann beispielsweise durch den Einsatz einer erhitzten Rolle zum Auftragen des Härters und/oder des Katalysators auf das Elektroisolationsband erfolgen. Nach dem Auftragen auf das Band wird der Härter und/oder der Katalysator wieder fest. Durch den Übergang von dem flüssigen in den festen Zustand haften der Härter und/oder der Katalysator besonders gut an dem Elektroisolationsband. Aufgrund der starken Haftung hat das Elektroisolationsband eine hohe Lagerungsstabilität.

In einem weiteren Aspekt betrifft die Erfindung ein Verfahren zum Herstellen eines Elektroisolationskörpers mit den Schritten: a1) Umwickeln eines elektrischen Leiters mit einem Elektroisolationsband; b) Durchtränken des Elektroisolationsbands aus Schritt a1) mit einem Imprägnierharz gemäß der Erfindung; und c) Aushärten des Imprägnierharzes.

Das Durchtränken bzw. Imprägnieren des Elektroisolationsbands mit dem erfindungsgemäßen Imprägnierharz und/oder das Aushärten des Imprägnierharzes erfolgen vorzugsweise durch ein Vakuum-Druck-Imprägnierungs-Prozess (VPI, vacuum pressure impregnation) und/oder ein Resin-Rich-Verfahren. Dabei wird in Gegenwart eines Katalysators eine Temperatur von beispielsweise etwa 50°C bis etwa 90°C eingestellt. Unter diesen Bedingungen reagiert der Härter mit dem Epoxidharz, so dass das Imprägnierharz teilweise geliert. Das Aushärten des Imprägnierharzes erfolgt bei einer höheren Temperatur als das Imprägnieren, um die Polymerisierung des Imprägnierharzes zu ermöglichen, beispielsweise bei etwa 150°C oder höher.

In einer bevorzugten Ausführungsform ist der Härter in einem festen Zustand in dem Epoxidharz suspendiert. In diesem Fall kann das Verfahren unter Verwendung eines bekannten Elektroisolationsbands durchgeführt werden. Durch das Fest/Flüssig-Zweiphasensystem von Epoxidharz und Härter steigt die Lagerungsstabilität des Imprägnierharzes.

In einer anderen bevorzugten Ausführungsform weist das Verfahren vor dem Durchtränken des Elektroisolationsbands den folgenden Schritt auf: a2) Mischen des Epoxidharzes mit den anorganischen Partikeln, wobei das Elektroisolationsband ein Elektroisolationsband gemäß der Erfindung ist und das Imprägnierharz in Schritt b) durch Inkontaktbringen des Gemischs aus Schritt a2) mit dem Elektroisolationsband aus Schritt a1) hergestellt wird. In dieser Ausführungsform wird ein erfindungsgemäßes Elektroisolationsband verwendet, das heißt ein imprägnierbares Elektroisolationsband, auf das ein Härter aufgebracht ist. Dadurch kann zum Durchtränken des Elektroisolationsbands ein härterfreies Gemisch von Epoxidharz und anorganischen Partikeln verwendet werden. beim Durchtränken des Elektroisolationsbands kommt das Gemisch mit dem Härter auf dem Elektroisolationsband in Kontakt, so dass hierbei das erfindungsgemäße Imprägnierharz entsteht. Auf diese Weise kann das Imprägnierharz ohne den Härter gelagert werden. Dadurch wird das Aufrechterhalten einer niedrigen Viskosität des Harzes während der Lagerung erleichtert und folglich eine hohe Lagerungsstabilität erreicht. Das erfindungsgemäße Elektroisolationsband weist ebenfalls eine hohe Lagerungsstabilität auf.

Das erfindungsgemäße Verfahren führt zu einem Elektroisolationskörper, der die gleichen Isolationseigenschaften wie bekannte Elektroisolationskörper hat. Dadurch wird die langfristige Qualität des Elektroisolationskörpers unter erhöhter elektrischer, mechanischer und thermischer Belastung gewährleistet.

In einem weiteren Aspekt betrifft die Erfindung einen Elektroisolationskörper, der mit dem erfindungsgemäßen Verfahren hergestellt worden ist. Der Elektroisolationskörper weist vorteilhaft eine lange Lebensdauer auf.

In einem weiteren Aspekt betrifft die Erfindung die Verwendung des Elektroisolationskörpers zur elektrischen Isolierung rotierender elektrischer Maschinen, insbesondere Generatoren. In diesen Maschinen ist die Isolation besonders starken Belastungen ausgesetzt. Daher ist eine lange Lebensdauer des Elektroisolationskörpers für eine dauerhafte Betriebssicherheit der Maschinen besonders wichtig.

Anhand von Beispielen wird im Folgenden die Erfindung näher erläutert.

In einem ersten Beispiel weist das Imprägnierharz Bisphenol-F-diglycidylether, Dicyandiamid und Aluminiumoxid-Partikel mit einem mittleren Partikeldurchmesser von etwa 20nm auf.

In einem zweiten Beispiel weist das Imprägnierharz Bisphenol-F-diglycidylether, Dicyandiamid, Aluminiumoxid-Partikel mit einem mittleren Partikeldurchmesser von etwa 20nm und Zinknaphthenat als Katalysator auf.

In einem dritten Beispiel weist das Imprägnierharz Bisphenol-A-diglycidylether, Benzoguanamin, Aluminiumoxid-Partikel mit einem mittleren Partikeldurchmesser von etwa 20nm und Tetrabutylammoniumbenzoat auf.

In einem vierten Beispiel weist das Imprägnierharz Bisphenol-F-digylcidylether, 1,6-Hexandioldiglycidylether, Dicyandiamid, Aluminiumoxid-Partikel mit einem mittleren Partikeldurchmesser von etwa 20nm und Zinkoctoat auf.

In einem fünften Beispiel weist das Imprägnierharz 3,4-Epoxycyclohexylmethyl-3,4-epoxy-cyclohexancarboxylat, Dicyandiamid, Aluminiumoxid-Partikel mit einem mittleren Partikeldurchmesser von etwa 20nm sowie Tetrabutylammoniumbenzoat und Zinknaphthenat auf.

In einem sechsten Beispiel weist das Imprägnierharz Bisphenol-F-digylcidylether, Dicyandiamid, 2-Ethyl-4-methylimidazol sowie Aluminiumoxid-Partikel mit einem mittleren Partikeldurchmesser von etwa 20nm auf.

In einem siebten Beispiel weist das Imprägnierharz Bisphenyl-A-diglycidylether, Dicyandiamid, Aluminiumoxid-Partikel mit einem mittleren Partikeldurchmesser von etwa 20nm und Styrol auf.

In einem achten Beispiel weist das Imprägnierharz Bisphenyl-A-diglycidylether, Dicyandiamid, Aluminiumoxid-Partikel mit einem mittleren Partikeldurchmesser von etwa 20nm, Styrol und hochmolekularen Bisphenol-A-diglycidylether auf.

In einem weiteren Beispiel wird ein Elektroisolationskörper hergestellt, indem zuerst ein elektrischer Leiter mit einem Glimmerband umwickelt wird. Anschließend wird das Glimmerband in einem Resin-Rich-Verfahren bei 70°C mit einem Imprägnierharz, das Bisphenol-F-diglycidylether, Dicyandiamid, Aluminiumoxid-Partikel mit einem mittleren Partikeldurchmesser von etwa 20nm und Zinknaphthenat aufweist, durchtränkt. Danach wird das Imprägnierharz bei 150°C ausgehärtet, um den Elektroisolationskörper fertig zu stellen.

In einem weiteren Beispiel wird ein Elektroisolationskörper hergestellt, indem ein elektrischer Leiter mit einem Glimmerband, auf das Dicyandiamin aufgebracht ist, umwickelt wird. Anschließend wird das Glimmerband in einem Resin-Rich-Verfahren mit einem Gemisch, das Bisphenol-F-diglycidylether und Aluminiumoxid-Partikel mit einem mittleren Partikeldurchmesser von etwa 20nm aufweist, durchtränkt. Durch den Kontakt des Gemisches mit dem Dicyandiamid auf dem Elektroisolationsband entsteht das Imprägnierharz. Danach wird das Imprägnierharz bei 150°C und durch Zufuhr von Zinkoctoat als Katalysator ausgehärtet, um den Elektroisolationskörper fertig zu stellen.

In einem weiteren Beispiel wird ein Elektroisolationskörper hergestellt, indem ein elektrischer Leiter mit einem Glimmerband umwickelt wird. Das Glimmerband weist auf einer Seite Dicyandiamid und auf einer zweiten Seite, die der ersten Seite abgewandt ist, Zinknaphthenat auf. Das Elektroisolationsband wird in einem Vakuum-Druck-Imprägnierungs-Prozess mit einem Gemisch, das Bisphenol-A-diglycidylether und Aluminiumoxid-Partikel mit einem mittleren Partikeldurchmesser von etwa 20nm aufweist, durchtränkt. Danach wird das Imprägnierharz bei 150°C ausgehärtet, um den Elektroisolationskörper fertig zu stellen.

Im Folgenden werden bevorzugte Ausführungsformen des erfindungsgemäßen Elektroisolationsbands anhand schematischer Zeichnungen dargestellt.

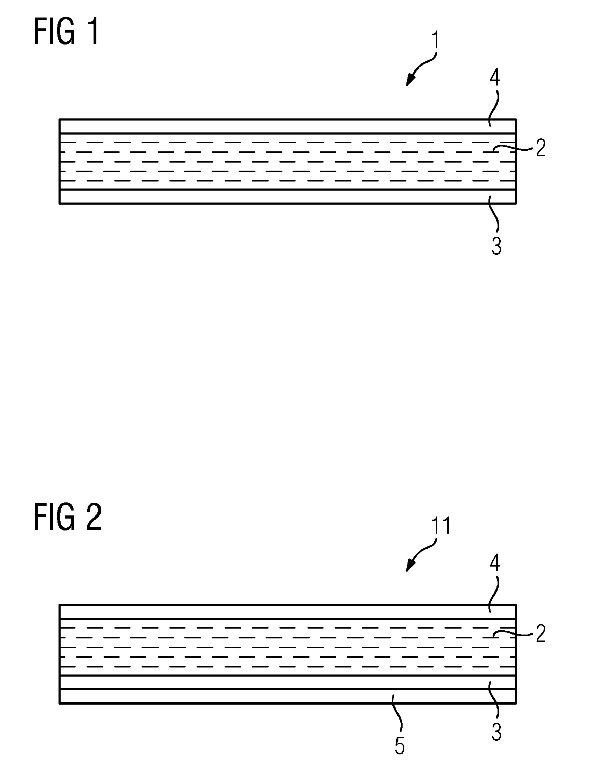

Figur 1 zeigt einen Querschnitt des erfindungsgemäßen Elektroisolationsbands 1. Das Elektroisolationsband 1 ist ein Glimmerband, das ein Glimmmerpapier 2 und ein Vlies 3 aufweist. Auf einer der zwei breiten Seiten des Elektroisolationsbands 1 ist Dicyandiamid als Härter 4 aufgebracht.

Figur 2 zeigt einen Querschnitt des erfindungsgemäßen Elektroisolationsbands 11. Das Elektroisolationsband 11 ist ein Glimmerband, das ein Glimmmerpapier 2 und ein Vlies 3 aufweist. Auf einer ersten Seite ist Dicyandiamid als Härter 4 aufgebracht. Auf einer zweiten Seite, die der ersten Seite abgewandt ist bzw. die der ersten Seite gegenüberliegt, ist Zinknaphthenat als Katalysator 5 aufgebracht. Die erste und die zweite Seite sind die breiten Seiten des Elektroisolationsbands 11, die im Vergleich zu den verbleibenden zwei Seiten des Elektroisolationsbands 11 eine größere Oberfläche haben.

## Patentansprüche

1. Anhydridfreies Imprägnierharz für einen Elektroisolationskörper,
wobei das Imprägnierharz ein Epoxidharz, einen Härter und nanoskalige und/oder mikroskalige anorganische Partikel aufweist,
wobei der Härter aus der Gruppe bestehend aus einem substituierten Guanidin, einem aromatischen Diamin, einem N-Acylimidazol, einem Metallsalzkomplex eines Imidazols, einem Carbonsäurehydrazid, einem Triazinderivat, Melamin, einem Melaminderivat, einer Cyanacetylverbindung, einer N-Cyanacylamid-Verbindung, einem Acylthiopropylphenol, einem Harnstoffderivat, einem aliphatischen Diamin, einem cycloaliphatischen Diamin, einem aliphatischen Polyamin, einem cycloaliphatischen Polyamin und Gemischen davon ausgewählt ist.

2. Imprägnierharz gemäß Anspruch 1,
wobei das substituierte Guanidin Dicyandiamid ist.

3. Imprägnierharz gemäß Anspruch 1 oder 2,
wobei der Härter in einem festen Zustand, bevorzugt in Form von Partikeln, besonders bevorzugt in Form von Partikeln mit einer Partikelgröße von 1µm - 100µm, in dem Epoxidharz suspendiert ist.

4. Imprägnierharz gemäß einem der Ansprüche 1 bis 3,
wobei der Härter in einer Menge bezogen auf das Epoxidharz von 1 Gew.-% - 15 Gew.-%, bevorzugt von 4 Gew.-% - 10 Gew.-% vorliegt.

5. Imprägnierharz gemäß einem der Ansprüche 1 bis 4,
wobei die anorganischen Partikel Aluminiumoxid, Aluminiumhydroxid, Siliziumdioxid, Titandioxid, Seltenerdenoxid, Alkalimetalloxid, Metallnitrid, und/oder Schichtsilikate, insbesondere exfolierte oder teilweise exfolierte Schichtsilikate, aufweisen.

6. Imprägnierharz gemäß einem der Ansprüche 1 bis 5,
wobei die anorganischen Partikel in einer Menge bezogen auf das Epoxidharz von 15 Gew.-% - 25 Gew.-%, bevorzugt von 17 Gew.-% vorliegen.

7. Imprägnierbares Elektroisolationsband (1) für einen Elektroisolationskörper,
wobei ein Härter (4) auf das Elektroisolationsband (1) aufgebracht ist.

8. Elektroisolationsband (1) gemäß Anspruch 7,
wobei der Härter (4) auf einer ersten Seite des Elektroisolationsbands (1) aufgebracht ist und ein Katalysator (5) auf einer zweiten Seite des Elektroisolationsbands (1), die der ersten Seite abgewandt ist, aufgebracht ist.

9. Elektroisolationsband (1) gemäß Anspruch 8,
wobei der Katalysator (5) aus der Gruppe bestehend aus Zinknaphthenat, Kobaltnaphthenat, Zinkoctoat, Kobaltoctoat, einem Imidazol, einem tertiären Amin, einem Aluminiumtrisalkylacetoacetat, Aluminiumtrisacetylacetonat, Aluminiumalkoholat, Aluminiumacylat, einem Tetraalkylammoniumbenzoat und Gemischen davon ausgewählt ist.

10. Elektroisolationsband (1) gemäß einem der Ansprüche 7 bis 9,
wobei der Härter (4) aus der Gruppe bestehend aus einem substituierten Guanidin, einem aromatischen Diamin, einem N-Acylimidazol, einem Metallsalzkomplex eines Imidazols, einem Carbonsäurehydrazid, einem Triazinderivat, Melamin, einem Melaminderivat, einer Cyanacetylverbindung, einer N-Cyanacylamid-Verbindung, einem Acylthiopropylphenol, einem Harnstoffderivat, einem aliphatischen Diamin, einem cycloaliphatischen Diamin, einem aliphatischen Polyamin, einem cycloaliphatischen Polyamin und Gemischen davon ausgewählt ist.

11. Verfahren zum Herstellen eines Elektroisolationskörpers mit den Schritten:
a1) Umwickeln eines elektrischen Leiters mit einem Elektroisolationsband;
b) Durchtränken des Elektroisolationsbands aus Schritt a1) mit einem Imprägnierharz gemäß einem der Ansprüche 1 bis 6; und
c) Aushärten des Imprägnierharzes.

12. Verfahren gemäß Anspruch 11,
wobei der Härter in einem festen Zustand in dem Epoxidharz suspendiert ist.

13. Verfahren gemäß Anspruch 11, mit dem Schritt:
a2) Mischen des Epoxidharzes mit den anorganischen Partikeln;
wobei das Elektroisolationsband ein Elektroisolationsband gemäß einem der Ansprüche 7 bis 10 ist und das Imprägnierharz in Schritt b) durch Inkontaktbringen des Gemischs aus Schritt a2) mit dem Elektroisolationsband aus Schritt a1) hergestellt wird.

14. Elektroisolationskörper,
der mit einem Verfahren gemäß einem der Ansprüche 11 bis 13 hergestellt worden ist.

15. Verwendung eines Elektroisolationskörpers gemäß Anspruch 14 zur elektrischen Isolierung rotierender elektrischer Maschinen, insbesondere Generatoren.
